# EUROPEAN PATENT APPLICATION

(11) **EP 0 875 278 A1**
(43) Date of publication of application: **04.11.1998**
(21) Application number: 98830244.4
(22) Date of filing: 23.04.1998
(51) Int. Cl.: B01D 53/04, F24C 15/20, B01D 46/30

(54) **Modular double action filter for exhaust hoods**

(30) Priority: 30.04.1997 IT AN970026
(71) Applicant: Dueffe S.r.l., Fabriano (AN) (IT)
(72) Inventor: Lori, Giancarlo, Fabriano (AN) (IT)
(74) Representative: Baldi, Claudio

(57) **Abstract**

This invention concerns a modular double action filter for exhaust hoods consisting of a synthetic fabric filtering cloth under which a number of containers with slotted bottom wall for housing the granule active carbons, are fitted.

## Description

This patent application concerns a double action modular filter ideal for filtering-exhaust hoods even if its technical - operating and structural characteristics make it suitable for other uses as well.

It is common knowledge that existing exhaust hoods are fitted with two separate filters: one consisting of a sealed cartridge containing active carbon and the other consisting of a piece of thick synthetic fabric.

Existing active carbon cartridges are plastic boxes containing a specific quantity of active carbons; the cartridges are placed horizontally in the supporting structure of the hood.

The two horizontal walls of a cartridge of this type consist of grids which permit the fumes to rise upwards so as to enter the cartridge through the layer of active carbons and then outwards to the exterior.

As the fumes pass through the filtering cartridge the gas and vapours in the fumes are absorbed by the active carbons thereby considerably reducing the polluting action of the fumes and the diffusion of bad odours.

It should be noted however that active carbon filters must be replaced periodically when the saturated carbons are no longer efficient.

In traditional hoods, the second mechanical filtering action is assured by pieces of special synthetic fabric placed in the casing which allow the passage of fumes but not of dust or other impurities in the fumes.

These filtering fabrics must also be periodically replaced when the quantity of impurities deposited on the same makes them inefficient.

Although this technique is quite efficient, various problems are associated to the same.

The first and most significant is the fact that the active carbon filters must be produced in many different models, each with a different structure, to suit the shape and internal capacity of the hood in which it is mounted; it is consequently evident that the filtering cartridges for different hood models are in no way interchangeable.

Moreover, the need to fit these filtering cartridges in the interior of the exhaust hoods means that the casing of the hood must be rather large.

Another disadvantage, in this case for the user, is the need to periodically check the efficiency of the two filters and to replace them at separate times.

The purpose of this invention is to realise a special filter with the filtering characteristics of both the active carbons and the synthetic fabric.

Moreover this new filter is also modular making it possible to fit easily into any exhaust hood model.

Moreover, the filter according to the invention is so compact that it can easily be fitted even into a very flat housing thereby allowing hood producers to realise extremely flat hoods.

Moreover the fact that the new filter has a double filtering action means that the user needs to check and when necessary replace only one filter instead of the two separate filters as in traditional hoods.

The inventive idea consists of fitting a regular series of containers holding a small quantity of active carbons under a conventional piece of filtering synthetic fabric.

It should be noted that said containers together provide the same filtering action of a conventional active carbon cartridge. The same are fitted with a slotted bottom wall which is glued below a conventional piece of synthetic filtering fabric so that the same seals the upper opening making it impossible for the active carbons to spill accidentally.

An item of this kind is generally mounted inside the casing of an exhaust hood so that the air drawn into the hood first passes through the slotted bottom walls into the adjacent series of active carbon containers and the clean air passes out of the containers upwards and through the filtering fabric which makes up the upper end wall into which all the solid impurities are deposited.

The advantages of this technology are very evident; the filter according to the invention is inexpensive to produce and is extremely versatile; after realising a large piece of the double action filter (as a semi finished part) the same can be cut into smaller parts suitable for that of the internal compartment of the exhaust hood in question.

Another advantage of the item in question is that the same can be rolled up when it is not used thereby reducing its overall dimensions.

This is particularly useful for packaging and transport and when the product is on display.

In this regard it should be noted in fact that the filter in question will undoubtedly be sold even in specialised shops or departmental stores in view of the fact that the depleted filter can be replaced with a new filter by the end user directly and does not require the intervention of a specialised technician.

This brief description clearly evidences the highly innovative features of the double action filter in question which introduces a new technology that supersedes traditional active carbon filter cartridges.

Finally, it is reiterated that the new filter can not only be used in exhaust hoods but also in any furniture unit, environment or even a motorcar in which it is necessary to purify the air; purely by way of example the filter may be used in shoe cupboards, refrigerators, cupboards, pantries etc.

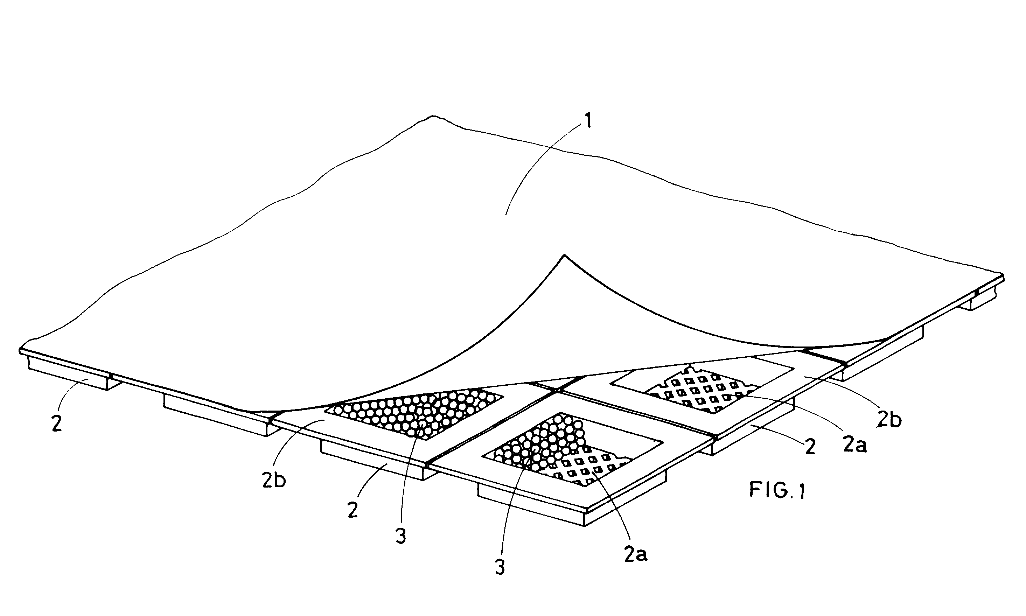

For major clarity the description of the invention continues with reference to the enclosed drawing which is intended for purposes of illustration and not in a limiting sense, where: - figure 1 is an axonometric view of the structure of the filter according to the invention with a section of the filtering fabric partially removed.

With reference to the above figure the double action filter according to the invention consists of a synthetic filtering fabric (1) under which a number of containers (2) with active carbon granules (3) are glued in regular order.

Each more or less parallelepiped shaped container (2) is fitted with a slotted bottom wall (2a) to allow air to pass into its interior; its mouthpiece has a wide perimeter edge (2b) which acts as a flange on which the overlying fabric (1) is glued.

## Claims

1. A modular double action filter characterised by a filtering synthetic fabric (1) under which the mouthpiece of several containers (2) with slotted bottom (2a) containing active carbon granules (3), is abutted and fixed.

2. A modular double action filter according to claim 1, characterised in that the above containers (2) feature a more or less parallelepiped shape and a mouthpiece provided with a perimeter flange (2b) on which the overlying filtering synthetic fabric (1) is glued.

3. A modular double action filter according to claim 1 characterised in that the above containers (2) are positioned in ordered rows and lines.

4. A modular double action filter according to claim 1 characterised in that the above containers (2) are positioned irregularly.
